(19) **Europäisches Patentamt / European Patent Office / Office européen des brevets**

(11) **EP 1 826 976 A1**

(12) **EUROPEAN PATENT APPLICATION**

(43) Date of publication:
**29.08.2007 Bulletin 2007/35**

(51) Int Cl.:
**H04L 27/26** (2006.01)

(21) Application number: **06290319.0**

(22) Date of filing: **22.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Alcatel Lucent**
**75008 Paris (FR)**

(72) Inventors:
• **Loewel, Thomas**
  **12247 Berlin (DE)**
• **Nolte, Klaus**
  **13505 Berlin (DE)**

(74) Representative: **Brose, Gerhard et al**
**Alcatel Lucent**
**Intellectual Property & Standards**
**70430 Stuttgart (DE)**

(54) **Soft-clipping of multi-carrier multiplexed signals by varying type, number and positions of the clipping functions**

(57) Method for soft-clipping of a multi-carrier multiplexed signal within a clipping window, wherein said clipping window comprises a plurality of proximate time discrete samples of a complex signal, each one exceeding a clipping threshold, said method comprising the steps of:
- calculating a difference signal by subtracting a number N of scaleable clipping functions from the complex signal within the clipping window, wherein said subtraction is performed for the I- and Q-part of the complex signal separately, and wherein the result of the calculation of the difference signal depends on degrees of freedom N - number of clipping functions, CF - clipping function, CP - clipping position, SFI - scaling factor for the I- part of the clipping function, SFQ - scaling factor for the Q- part of the clipping function,
- determining an envelope of said difference signal,
- subtracting the clipping threshold from said envelope of the difference signal, in order to get distance values between the envelope and the clipping threshold for every sample within the clipping window,
- determining the minimum of the sum of all distances by varying said degrees of freedom
- applying clipping functions with respect to said degrees of freedom according to the minimum determined within said clipping window.

EP 1 826 976 A1

**Description**

The present invention relates generally to a system and method for transmitting digital signals, particularly with soft-clipping techniques for reduction of the peak-to-average power ratio of multi-carrier multiplexed signals.

To increase the efficiency of power amplifiers used to amplify particularly multi-carrier multiplexed signals, like e.g. Orthogonal Code Division Multiplex (OCDM) or Orthogonal Frequency Division Multiplex (OFDM) signals, it is known to reduce the peak-to-average power ration by so-called soft-clipping.

By soft-clipping, a scaleable reference function, further called clipping function, is subtracted from a sampled signal, i.e. time discrete signal, in a way that the subtracted clipping function reduces the peak power of at least one signal sample within a clipping window. The clipping window is defined as at least one, but typically a plurality of proximate samples exceeding a predefined clipping threshold. The clipping function typically is a symmetrical function comprising a maximum within the clipping window. The position of this maximum is defined by the so-called clipping position.

From US 6,175,551 a soft-clipping method is known wherein a scaled clipping function is subtracted from a signal within a clipping window. Thereby the clipping position of the clipping function lies in the middle of the clipping window. The drawback of this solution is that, by subtracting one clipping function from a signal within a clipping window, the primal peak of the signal within the clipping window is reduced or eliminated, but at least two new peaks are generated lying besides the primal peak.

From EP 1 458 159 A1 a soft-clipping method is known wherein, after determination of the clipping window by detecting a portion of the signal being above a clipping threshold, the signal within the clipping window is decomposed into a number of well-defined decomposition functions together recreating the envelope of said portion of the signal within the clipping window. Thereby, the number of decomposition functions the signal is decomposed in, is proportional to the duration of the clipping window, i.e. the longer the clipping window is, the higher becomes the number of decomposition functions. The decomposition functions are symmetrical functions like e.g. Gaussian or triangle functions. To perform the soft clipping, well-defined scalable clipping functions are subtracted from the signal, wherein the clipping positions of the clipping functions are defined by the positions of the decomposition functions. The decomposition of the signal is performed by determining a minimum for

$$\left| P - \sum_{i=1}^{N} f(x_i, A_i) \right| \qquad (1)$$

where P is the portion of the signal to be transmitted which is above the clipping threshold, N is the number of elementary functions f used to perform the decomposition, $x_i$ the position of the maxima of the elementary functions $f$, and $A_i$ is the amplitude at the positions of the maxima $X_i$.

A drawback of this solution is that, by decomposing of the signal into symmetrical decomposition functions, the decomposition functions are arranged symmetrical to the middle of the clipping window, i.e. symmetrical to the maxima of the envelope of the complex signal. Optimization only takes place in decomposing the signal. Moreover it is very complex first to decompose the signal itself into a plurality of decomposition functions by determining a minimum according to equation (1), then to use the positions of the decomposition functions for placing the clipping functions, and finally to subtract the clipping functions within the clipping window from the signal, resulting in high computational costs.

From EP 1 396 970 B1 a method to calculate scaling factors is also known wherein the scaling factor for one maximum of the complex signal within the clipping window takes into account an influence on said maximum which occurs, if a scaling factor is applied to at least one other maximum of said complex signal within the clipping window.

In general, the commonality of the known soft-clipping methods is that the clipping position is equivalent with the maximum of the envelope of the complex signal.

The object of the invention is to provide an improved method for soft-clipping of multi-carrier multiplexed signals.

The object of the invention is met by a method for soft-clipping of a multi-carrier multiplexed signal according to claim 1.

The method according to the invention has the advantage over the state of the art that it considers the superposition of clipping functions and benefits from the superposition of said clipping functions. Moreover the number N of clipping functions and clipping positions is variable and independent of the number of maxima within a clipping window. The method enables a very good peak-to-average ratio reduction and minimize overclipping. The increasing of EVM (Error Vector Magnitude) and the PCDE (Peak Code Domain Error) in the clipped signal is moderate compared to previous soft-clipping methods. Furthermore, the method according to the invention automatically considers the influence of scaling factors applied on different samples within the clipping window among each other.

According to a preferred embodiment of the invention, the determination of the minimum of the sum of all distances is performed according to:

$$\sum_{n=n_a}^{n_b} \left\| \left| s_{cf\,Re}(n) + j \cdot s_{cf\,Im}(n) - \sum_{x=1}^{N} \left[ (SFI(x) + j \cdot SFQ(x)) \cdot CF(n - CP(x)) \right] \right| - T_{clip} \right\| = min$$

wherein

$T_{clip}$ is the clipping threshold;
$S_{cf} = S_{cf\,Re} + s_{cf\,Im}$ is the complex signal within the clipping window;
$n_a$ is the first sample number above clipping threshold,
$n_b$ is the last sample number above clipping threshold, with

$$n, n_a, n_b \in Z, n_a \le n \le n_b;$$

CF is the clipping function;
CP is the clipping position;
*SFI,* SFQ are scaling factors for the I and Q-parts of the clipping functions respectively; and
N is the number of clipping functions and clipping positions respectively, and
wherein CF, CP, *SFI,* SFQ and *N* are the degrees of freedom.

It is also possible that, in order to primarily consider a peak-to-average ratio reduction, instead of the determination of the minimum of the sum of all distances only the maximum of all distances is considered and minimized according to:

$$\max_{n_a \le n \le n_b} \left( \left\| \left| s_{cf\,Re}(n) + j \cdot s_{cf\,Im}(n) - \sum_{x=1}^{N} \left[ (SFI(x) + j \cdot SFQ(x)) \cdot CF(n - CP(x)) \right] \right| - T_{clip} \right\| \right) = min.$$

According to another preferred embodiment of the invention, the determination of the minimum of the sum of all distances is performed according to:

$$\sum_{n=n_a}^{n_b} \left( \frac{s_{clipped}(n)}{2 \cdot |s_{clipped}(n)|} + \frac{1}{2} \right) \cdot s_{clipped}(n) = min,$$

wherein

$$s_{clipped}(n) = \left| s_{cf\,Re}(n) + j \cdot s_{cf\,Im}(n) - \sum_{x=1}^{N} \left[ (SFI(x) + j \cdot SFQ(x)) \cdot CF(n - CP(x)) \right] \right| - T_{clip}$$

with the same parameters as mentioned above. Hereby again the clipping functions, the clipping positions, the scaling factors and the number of clipping functions are the degrees of freedom.

Also here, according to this preferred embodiment, it is possible that, in order to primarily consider a peak-to-average ratio reduction, instead of the determination of the minimum of the sum of all distances only the maximum of all distances is considered and minimized according to:

$$\max_{n_a \le n \le n_b} \left( \left| s_{cf\,Re}(n) + j \cdot s_{cf\,Im}(n) - \sum_{x=1}^{N} \left[ (SFI(x) + j \cdot SFQ(x)) \cdot CF(n - CP(x)) \right] \right| - T_{clip} \right) = min.$$

In a preferred embodiment of the method according to the invention, the number N of scaleable clipping functions is determined by a trial and error method, e.g. by determining all maxima M of the envelope of the complex signal and the length L of the clipping window, setting N = M as an initial value and increasing or decreasing the value of N so that the ratio L/N lies within a given interval.

In a particularly preferred embodiment of the method according to the invention, at least an initial value for the scaling factors is determined according to:

$$SFI = S \cdot s_{cf\,Im}(n = n_{max});$$

$$SFQ = S \cdot s_{cf\,Re}(n = n_{max})$$

with

$$S = 1 - \frac{T_{clip}}{R_{max}}$$

and

$$R_{max} = \max_{n_a \le n \le n_b} \left( \left| s_{cf}(n) \right| \right) = \max_{n_a \le n \le n_b} \left( \sqrt{s_{cf\,Im}(n)^2 + s_{cf\,Re}(n)^2} \right).$$

Thereby $R_{max}$ is a maximum of the norm of the complex signal within the clipping window, and $n_{max}$ is a sample of the complex signal within the clipping window where a maximum of the norm of the complex signal occurs. Thereby it is thinkable that in order to simplify the optimization procedure by determining the minimum of the sum of all distances by varying the degrees of freedom, the scaling factors that are some of the degrees of freedom remain said initial values as determined above at least as a first approximation.

According to an additional preferred embodiment of the invention, the positions of the maxima of the complex signal within the clipping window are considered as initial values for the clipping positions of the clipping functions.

In another preferred embodiment of the invention, said method is performed by a computer program product stored on a computer usable medium comprising computer readable program means for causing a computer to perform the method mentioned above, when said computer program product is executed on a computer.

Still another preferred embodiment of the invention concerns an electronic circuit comprising means to perform the method according to the invention mentioned above or means to execute the computer readable program means of the computer program product mentioned above.

Another preferred embodiment of the invention concerns a transmitter circuit comprising means to perform the method mentioned above and/or an electronic circuit as mentioned above.

Paths for performing the invention:

In the following, for a better understanding, a method according to the invention is described in combination with the following equation:

$$\sum_{n=n_a}^{n_b} \left\| \left| s_{cf\,Re}(n) + j \cdot s_{cf\,Im}(n) - \sum_{x=1}^{N}\left[(SFI(x) + j \cdot SFQ(x))\cdot CF(n - CP(x))\right] \right| - T_{clip} \right\| = min \qquad (2)$$

where

$T_{clip}$ is the clipping threshold;

$S_{cf} = S_{cfRe} + S_{cfIm}$ is the complex signal within the clipping window;

$n_a$ is the first sample number above clipping threshold and $n_b$ is the last sample number above clipping threshold, with

$$n, n_a, n_b \in Z, n_a \leq n \leq n_b;$$

CF is the clipping function;

CP is the clipping position;

*SFI*, SFQ are scalingfactors for the I and Q-parts of the clipping functions respectively; and

N is the number of clipping functions and clipping positions respectively.

The principle procedure of equation (2) is, that a number N of scaled clipping functions CF will be subtracted from the individual samples n of the complex signal $s_{cf}$ within a clipping window according to

$$s_{cf\,Re}(n) + j \cdot s_{cf\,Im}(n) - \sum_{x=1}^{N}\left[(SFI(x) + j \cdot SFQ(x))\cdot CF(n - CP(x))\right]. \qquad (2.1)$$

Thereby the clipping window is defined as a plurality of proximate time discrete samples n of said complex signal $S_{cf}$, each one exceeding a clipping threshold $T_{clip}$. This subtraction will be done in the I- $S_{cf\,Im}$ and Q part $S_{cf\,Re}$ of the complex signal $_{Scf}$ separately. The result of this subtraction is a sequence of time discrete values describing an envelope of a soft-clipped part of the complex signal $S_{cf}$ within the clipping window. Calculating the norm, i.e. the absolute value of this envelope according to

$$\left| s_{cf\,Re}(n) + j \cdot s_{cf\,Im}(n) - \sum_{x=1}^{N}\left[(SFI(x) + j \cdot SFQ(x))\cdot CF(n - CP(x))\right] \right| \qquad (2.2)$$

ensures to receive meaningful results in the next step when the clipping threshold $T_{clip}$ is subtracted from the envelop of the difference signal according to

$$\left| s_{cf\,Re}(n) + j \cdot s_{cf\,Im}(n) - \sum_{x=1}^{N}\left[(SFI(x) + j \cdot SFQ(x))\cdot CF(n - CP(x))\right] \right| - T_{clip}. \qquad (2.3)$$

After that, another calculation of the norm is performed according to

$$\left\| \left| s_{cf\,Re}(n) + j \cdot s_{cf\,Im}(n) - \sum_{x=1}^{N}\left[(SFI(x) + j \cdot SFQ(x))\cdot CF(n - CP(x))\right] \right| - T_{clip} \right\| \qquad (2.4)$$

in order to ensure receiving only positive distances between the envelope and the clipping threshold $T_{clip}$ for every sample within the clipping window.

In a further step, all distances are added up according to

$$\sum_{n=n_a}^{n_b}\left\|\left|s_{cf\,Re}(n)+j\cdot s_{cf\,Im}(n)-\sum_{x=1}^{N}\left[(SFI(x)+j\cdot SFQ(x))\cdot CF(n-CP(x))\right]\right|-T_{clip}\right| \qquad (2.5)$$

The purpose is now, to minimize this sum according to equation (2). Thus, a number N of scaled and time shifted clipping functions CF approximates the original run of the norm of the curve above the threshold $T_{clip}$ within the clipping window. The performance of this approximation depends on the use of the degrees of freedom within (2). These degrees of freedom are the number N of clipping functions CF, the clipping functions CF themselves, the clipping positions CP of the clipping functions CF and the scaling factors SFI and SFQ for the clipping functions CF respectively.

Another possible approach is given by the equation

$$\sum_{n=n_a}^{n_b}\left(\frac{s_{clipped}(n)}{2\cdot\left|s_{clipped}(n)\right|}+\frac{1}{2}\right)\cdot s_{clipped}(n)=min,$$

$$(3)$$

$$s_{clipped}(n)=\left|s_{cf\,Re}(n)+j\cdot s_{cf\,Im}(n)-\sum_{x=1}^{N}\left[(SFI(x)+j\cdot SFQ(x))\cdot CF(n-CP(x))\right]\right|-T_{clip}$$

This approach waives the outer norm calculation and only adds up all positive distances between the envelope and the threshold.

The individual advantages of equations (2) and (3) are as follows. With help of (2) the overclipping will be effective prevented. Thus, the increasing of EVM (Error Vector Magnitude) and the PCDE (Peak Code Domain Error) in the clipped signal is moderate. But the peak-to-average reduction may be not optimal compared with (3). With help of (3) the peak-to-average reduction is very good, but the EVM and the PCDE increased in the clipped signal compared with (2).

If only the peak-to-average reductions is important, (2) and (3) can be formulated as follows:

$$\max_{n_a\leq n\leq n_b}\left(\left\|\left|s_{cf\,Re}(n)+j\cdot s_{cf\,Im}(n)-\sum_{x=1}^{N}\left[(SFI(x)+j\cdot SFQ(x))\cdot CF(n-CP(x))\right]\right|-T_{clip}\right\|\right)=min$$

$$(4)$$

$$\max_{n_a\leq n\leq n_b}\left(\left|s_{cf\,Re}(n)+j\cdot s_{cf\,Im}(n)-\sum_{x=1}^{N}\left[(SFI(x)+j\cdot SFQ(x))\cdot CF(n-CP(x))\right]\right|-T_{clip}\right)=min$$

$$(5)$$

With help of (4) respectively (5) the maximum value of the envelop of the complex signal within the clipping window will be minimized. The pro and contra of (4) and (5) is the same as (2) respectively (3).

As mention above the use of the degrees of freedom within equations (2) to (5) is very important for a good peak-to-average reduction with a minimum of EVM respectively PCDE increasing.

The determination of $N$ preferably is a trial and error method and depends on the complex signal that is e.g. a one to four carrier UMTS (Universal Mobile Telecommunications System) signal, i.e. typically a W-CDMA (Wideband Code Division Multiple Access) signal, an OFDM signal and the like. One approach is the determination of all maxima $M$ of the envelope of the complex signal in order to get an initial value for $N$ by setting $N = M$. This approach can be combined with the length $L$ of the clipping window. That means if the ratio $L/M$ between the length of the clipping window and the number of maxima $M$ is huge, $N$ should be increased so that the ratio $L/N$ is within a given interval $(v_1, ..., v_2)$. Reverse, if the ratio is teeny, $N$ should be decreased.

The determination of initial values for the scaling factors SFI respectively *SFQ* can be performed as described in the European Patent Application EP 1396970 B1, where - applied on the invention - the scaling factors are basically determined according to:

$$S = 1 - \frac{T_{clip}}{R_{max}}.$$

Thereby $R_{max}$ is a maximum of the norm of the complex signal within the clipping window. Practically first of all said maximum $R_{max}$ is determined according to:

$$R_{max} = \max_{n_a \leq n \leq n_b} \left( \left| s_{cf}(n) \right| \right) = \max_{n_a \leq n \leq n_b} \left( \sqrt{s_{cf\,Im}(n)^2 + s_{cf\,Re}(n)^2} \right).$$

After this the scaling factors SFI and SFQ are determined according to:

$$SFI = S \cdot s_{cf\,Im}(n = n_{max});$$

$$SFQ = S \cdot s_{cf\,Re}(n = n_{max})$$

wherein

$$S = 1 - \frac{T_{clip}}{R_{max}}.$$

Thereby $n_{max}$ is a sample n of the complex signal $S_{cf}$ within the clipping window where a maximum of the norm of the complex signal $s_{cf}$ occurs

It is important to mention, that a main advantage of the equations (2) to (5) is the free choice of clipping positions CP. The determination of the clipping positions CP can be done with a nonlinear optimization method. Therefore, the target functions (2), (3), (4), (5) have been developed. Using a target function, the minimum of this target function is equivalent with the optimal clipping positions CP.

Commercial applicability:

The invention is commercially applicable particularly in the field of production and operation of communications and/or data networks and components of such networks like e.g. transmitter circuits performing OCDM, OFDM, W-CDMA and the like.

**Claims**

1. Method for soft-clipping of a multi-carrier multiplexed signal within a clipping window, wherein said clipping window comprises a plurality of proximate time discrete samples (n) of a complex signal ($s_{cf}$), each one exceeding a clipping threshold ($T_{clip}$), said method comprising the steps of:

   - calculating a difference signal by subtracting a number N of scaleable clipping functions (CF) from the complex signal ($S_{cf}$) within the clipping window, wherein said subtraction is performed for the I- ($S_{cf\,Im}$) and Q-part ($S_{cf\,Re}$) of the complex signal ($S_{cf}$) separately, and wherein the result of the calculation of the difference signal depends on degrees of freedom (N, CF, CP, SFI, SFQ),
   - determining an envelope of said difference signal,
   - subtracting the clipping threshold ($T_{clip}$) from said envelope of the difference signal, in order to get distance values between the envelope and the clipping threshold ($T_{clip}$) for every sample (n) within the clipping window,
   - determining the minimum of the sum of all distances by varying said degrees of freedom (N, CF, CP, SFI, SFQ), and
   - applying clipping functions (CF) with respect to said degrees of freedom (N, CF, CP, SFI, SFQ) according to the minimum determined within said clipping window.

2. Method according to claim 1, **characterized in that** the determination of the minimum of the sum of all distances is performed according to:

$$\sum_{n=n_a}^{n_b} \left\| \left| s_{cf\,Re}(n) + j \cdot s_{cf\,Im}(n) - \sum_{x=1}^{N} \left[ (SFI(x) + j \cdot SFQ(x)) \cdot CF(n - CP(x)) \right] \right| - T_{clip} \right\| = min$$

   wherein
   $T_{clip}$ is the clipping threshold;
   $S_{cf} = S_{cf\,Re} + S_{cf\,Im}$ is the complex signal within the clipping window;
   $n_a$ is the first sample number above clipping threshold,
   $n_b$ is the last sample number above clipping threshold, with

$$n, n_a, n_b \in \mathbb{Z}, \; n_a \leq n \leq n_b;$$

   CF is the clipping function;
   CP is the clipping position;
   SFI, SFQ are scaling factors for the I and Q-parts of the clipping functions respectively; and
   N is the number of clipping functions and clipping positions respectively, and
   wherein CF, CP, SFI, SFQ and N are the degrees of freedom.

3. Method according to claim 2, **characterized in that** in order to primarily consider a peak-to-average ratio reduction, instead of the determination of the minimum of the sum of all distances only the maximum of all distances is considered and minimized according to:

$$\max_{n_a \leq n \leq n_b} \left( \left| \left| s_{cf\,Re}(n) + j \cdot s_{cf\,Im}(n) - \sum_{x=1}^{N} \left[ (SFI(x) + j \cdot SFQ(x)) \cdot CF(n - CP(x)) \right] \right| - T_{clip} \right| \right) = min.$$

4. Method according to claim 1, **characterized in that** the determination of the minimum of the sum of all distances is performed according to:

$$\sum_{n=n_a}^{n_b} \left( \frac{s_{clipped}(n)}{2 \cdot |s_{clipped}(n)|} + \frac{1}{2} \right) \cdot s_{clipped}(n) = min,$$

wherein

$$s_{clipped}(n) = \left| s_{cf\,Re}(n) + j \cdot s_{cf\,Im}(n) - \sum_{x=1}^{N} \left[ (SFI(x) + j \cdot SFQ(x)) \cdot CF(n - CP(x)) \right] \right| - T_{clip}$$

and

$T_{clip}$ is the clipping threshold;
$S_{cf} = S_{cf\,Re} + S_{cf\,Im}$ is the complex signal within the clipping window;
$n_a$ is the first sample number above clipping threshold,
$n_b$ is the last sample number above clipping threshold, with

$$n, n_a, n_b \in Z, n_a \leq n \leq n_b;$$

CF is the clipping function;
CP is the clipping position;
*SFI, SFQ* are scalingfactors for the I and Q-parts of the clipping functions respectively; and
N is the number of clipping functions and clipping positions respectively, and wherein *CF, CP, SFI, SFQ* and *N* are the degrees of freedom.

5. Method according to claim 4, **characterized in that** in order to primarily consider a peak-to-average ratio reduction, instead of the determination of the minimum of the sum of all distances only the maximum of all distances is considered and minimized according to:

$$\max_{n_a \leq n \leq n_b} \left( \left| s_{cf\,Re}(n) + j \cdot s_{cf\,Im}(n) - \sum_{x=1}^{N} \left[ (SFI(x) + j \cdot SFQ(x)) \cdot CF(n - CP(x)) \right] \right| - T_{clip} \right) = min.$$

6. Method according to one of the previous claims, **characterized in that** the number N of scaleable clipping functions (CF) is determined by a trial and error method, e.g. by determining all maxima (M) of the envelope of the complex signal and the length L of the clipping window, setting the number N of scaleable clipping functions equal to the number of maxima (*N = M*) as an initial value, and increasing or decreasing the value of N so that the ratio L/N lies within a given interval ($V_1$, ..., $V_2$).

7. Method according to one of the previous claims, **characterized in that** at least an initial value for the scaling factors *(SFI, SFQ)* is determined according to:

$$SFI = S \cdot s_{cf\,Im}(n = n_{max});$$

$$SFQ = S \cdot s_{cf\,Re}(n = n_{max})$$

with

$$S = 1 - \frac{T_{clip}}{R_{max}}$$

and

$$R_{max} = \max_{n_a \leq n \leq n_b}\left(\left|s_{cf}(n)\right|\right) = \max_{n_a \leq n \leq n_b}\left(\sqrt{s_{cf\,Im}(n)^2 + s_{cf\,Re}(n)^2}\right),$$

with $R_{max}$ being a maximum of the norm of the complex signal ($S_{cf}$) within the clipping window, and $n_{max}$ being a sample (n) of the complex signal ($S_{cf}$) within the clipping window where a maximum of the norm of the complex signal $(S_{cf})$ occurs.

8. Method according to one of the previous claims, **characterized in that** the positions of the maxima (M) of the complex signal ($s_{cf}$) within the clipping window are considered as initial values for the clipping positions (CP) of the clipping functions (CF).

9. Computer program product stored on a computer usable medium comprising computer readable program means for causing a computer to perform the method of anyone of the claims 1 to 8, when said computer program product is executed on a computer.

10. Electronic circuit comprising means to perform the method of anyone of the claims 1 to 8 and/or means to execute the computer readable program means of the computer program product of claim 9.

11. Transmitter circuit comprising means to perform the method according to one of the claims 1 to 8 and/or an electronic circuit according to claim 10.

**European Patent Office**

**EUROPEAN SEARCH REPORT**

Application Number

EP 06 29 0319

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/005014 A1 (TALWAR SHILPA ET AL) 8 January 2004 (2004-01-08) * paragraph [0006] - paragraph [0009] * * figure 3 * * figure 4 * * figure 7 * * paragraph [0027] * * paragraph [0041] * * paragraph [0050] - paragraph [0062] * ----- | 1-11 | INV. H04L27/26 |

TECHNICAL FIELDS SEARCHED (IPC)

H04L

The present search report has been drawn up for all claims

| Place of search | Date of completion of the search | Examiner |
|---|---|---|
| Berlin | 3 August 2006 | Douglas, I |

EPO FORM 1503 03.82 (P04C01)

## ANNEX TO THE EUROPEAN SEARCH REPORT
## ON EUROPEAN PATENT APPLICATION NO.

EP 06 29 0319

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2006

| Patent document cited in search report | Publication date | Patent family member(s) | Publication date |
|---|---|---|---|
| US 2004005014 A1 | 08-01-2004 | AU 2003245670 A1<br>CN 1666437 A<br>EP 1522153 A1<br>US 2005135503 A1<br>WO 2004006464 A1 | 23-01-2004<br>07-09-2005<br>13-04-2005<br>23-06-2005<br>15-01-2004 |

EPO FORM P0459

For more details about this annex : see Official Journal of the European Patent Office, No. 12/82

**REFERENCES CITED IN THE DESCRIPTION**

**Patent documents cited in the description**

- US 6175551 A
- EP 1458159 A1
- EP 1396970 B1